# EUROPÄISCHE PATENTSCHRIFT

(11) **EP 1 060 069 B1**
(45) Veröffentlichungstag und Bekanntmachung des Hinweises auf die Patenterteilung: **12.06.2002**
(21) Anmeldenummer: 99914463.7
(22) Anmeldetag: 02.03.1999
(51) Int. Cl.: B29C 70/20, B29B 11/16

(54) **FASERGELEGEANORDNUNG UND VERFAHREN ZUR HERSTELLUNG EINES VORFORMLINGS**
FIBROUS STRUCTURE ARRANGEMENT AND A METHOD FOR PRODUCING A PREFORM
AGENCEMENT DE STRUCTURE A FIBRES ET PROCEDE POUR LA PRODUCTION D'UNE EBAUCHE

(30) Priorität: 04.03.1998 DE 19809264
(43) Veröffentlichungstag der Anmeldung: 20.12.2000
(73) Patentinhaber: ELDRA KUNSTSTOFFTECHNIK GMBH, D-84137 Vilsbiburg (DE)
(72) Erfinder: BÖCKEL, Hermann, D-84144 Geisenhausen (DE); FEDL, Jürgen, D-84155 Bodenkirchen (DE)
(74) Vertreter: HOFFMANN - EITLE
(86) Internationale Anmeldenummer: EP9901339
(87) Internationale Veröffentlichungsnummer: WO9944810

(56) Entgegenhaltungen:
- EP-A- 0 361 796
- DE-A- 19 608 127

## Beschreibung

### Technisches Gebiet

Die Erfindung betrifft eine Fasergelegeanordnung für einen Vorformling eines Faserverbundwerkstoffbauteils gemäß dem Oberbegriff des Anspruchs 1. Ferner betrifft die Erfindung ein Verfahren zur Herstellung eines Vorformlings für ein Faserverbundwerkstoffbauteil.

### Stand der Technik

Die Herstellung von Faserverbundwerkstoffbauteilen, etwa im Bootsbau, der Luft- und Raumfahrttechnik oder der Automobilindustrie, erfolgt nach zahlreichen bekannten Fertigungsverfahren. Bei automatisierten Fertigungsverfahren, wie etwa dem RTM-Verfahren (resin transfer moulding), dem DP-RTM-Verfahren (differential pressure - RTM), dem RIM-Verfahren (reaction injection moulding), dem Vakuumsinjektionsverfahren oder dem Druckinjektionsverfahren, werden Vorformlinge aus Verstärkungsfasern, z.B. Glasfasern, verwendet. Die Vorformlinge werden separat vorgefertigt und dann in das Bauteilformwerkzeug eingelegt, wo z.B. eine Kunstharzmatrix zugeführt wird und die Aushärtung des Verbundes zum fertigen Faserverbundwerkstoffbauteil erfolgt.

Die Vorformlinge werden z.B. aus Glasfasermatten gefertigt. Die Einzelfasern in der Matte sind dabei relativ kurz, bis ca. 15 cm, und sind chaotisch angeordnet. Bei der Mattenherstellung werden die Fasern mit einem Binder versehen, also z.B. mit einem Bindemittel getränkt. Beim späteren Umformprozeß der Fasermatte wird dieser Binder z.B. durch Zufuhr von Strahlungswärme erweicht, die Matte in einem Preßwerkzeug in eine vorgegebene dreidimensionale Gestalt gepreßt und abgekühlt. Die kurzen Fasern orientieren sich bei diesem Umformprozeß neu, so daß der Vorformling anschließend die gewünschte Geometrie beibehält. Dies wird durch die wirre, ungerichtete Anordnung der Einzelfasern in der Matte und die geringe Faserlänge wesentlich erleichtert. Mit solchen Vorformlingen lassen sich beispielsweise faserverstärkte Verkleidungsbauteile wie Türverkleidungsträger für Kraftfahrzeugtüren herstellen.

Für die Anforderungen, die an höherbelastete Strukturbauteile gestellt werden, reichen die ungerichteten, kurzfaserigen Verstärkungsmatten aber vielfach nicht mehr aus. Hier sind dann Vorformlinge aus definiert ausgerichteten Endlosfasern erforderlich, meist in Form multiaxialer Fasergelege. Eine solche Fasergelegeanordnung mit gebündelten Endlosfasern, sogenannten Rovings, ist beispielsweise in der DE 195 37 663 A1 beschrieben. Dort werden die einzelnen Lagen mit unterschiedlicher Faserorientierung (z.B. +/- 45°) fest miteinander verklebt. Hierfür wird der einen Lage ein Haftfadengitter aufkaschiert, dessen Haftfäden mit Permanentkleber oder Kunstharzkleber benetzt sind, und die nächste Lage wird mit dieser Lage verpreßt, so daß eine unverschiebbare Einheit entsteht. Eine andere gängige Gelegekonstruktion besteht darin, die mehrachsig gelegten Faserbündel miteinander zu vernähen.

Besonders bei Bauteilen mit komplexer Geometrie bereitet aber der anschließende Umformprozeß zur Herstellung von Fasergelege-Vorformlingen, die dann für die Weiterverarbeitung in einem der eingangs erwähnten automatisierten Herstellungsverfahren vorgesehen sind, erhebliche Probleme. Denn beim Umformprozeß einer gerichteten Fasergelegeanordnung mit Endlosfasern in komplexe konkave und konvexe Vorformling-Konturen entstehen vielfach Spannungen im Vorformling und aufgrund der resultierenden Rückstellkräfte erhält man keinen paßgenauen Vorformling für die entsprechende Weiterverarbeitung zum fertigen Verbundbauteil.

Aus der EP-A-0 361 796 ist entsprechend dem Oberbegriff des Anspruchs 1 eine Fasergelegeanordnung für einen Vorformling eines Faserverbundwerkstoffbauteils bekannt, mit mindestens einer Gelegeschicht aus gleichgerichteten nebeneinander angeordneten, jeweils aus Verstärkungsfasern gebildeten Faserbündeln; und mit mindestens einer Schicht aus einem flächenförmigen Schmelzklebergebilde; wobei die Schichten aufeinanderliegen und miteinander vernäht sind.

Aus der DE-A-196 08 127 ist ein Verfahren zur Herstellung eines Vorformlings für ein Faserverbundwerkstoffbauteil bekannt, mit folgenden Verfahrensschritten: Bilden schichtweise aufeinanderliegender flächiger Lagen aus nebeneinanderliegenden, jeweils in bestimmter Orientierung ausgerichteten Verstärkungsfaserbündeln unter Einfügung zumindest einer Deck- oder Zwischenlage aus einem als ganzes Teil handhabbaren, flächigen Schmelzklebergebilde, Erwärmen der Fasergelegeanordnung bis auf Schmelz- bzw. Verarbeitungstemperatur des zumindest einen eingenähten Schmelzklebergebildes; Pressen der erwärmten Fasergelegeanordnung in einem Preßformwerkzeug in eine vorgegebene dreidimensionale Formgestalt; und Abkühlen und Entformen des dreidimensionalen Vorformlings.

### Darstellung der Erfindung

Der Erfindung liegt das technische Problem zugrunde, eine Fasergelegeanordnung für einen Vorformling und ein Verfahren zur Herstellung eines Vorformlings zu schaffen, mit denen ein automatisierter Herstellungsprozeß struktureller Faserverbundwerkstoffbauteile komplexer Geometrie ermöglicht wird.

Dieses technische Problem wird erfindungsgemäß von einer Fasergelegeanordnung mit den Merkmalen des Patentanspruchs 1 bzw. einem Verfahren zur Herstellung eines Vorformlings mit den Merkmalen des Patentanspruchs 11 gelöst.

Zweckmäßige Weiterbildungen der Erfindung sind Gegenstand der abhängigen Ansprüche.

Bei der erfindungsgemäßen Fasergelegeanordnung ist mindestens eine Gelegeschicht aus gleichgerichtet nebeneinander angeordneten, aus endlosen Verstärkungsfasern gebildeten Faserbündeln (Rovings) und mindestens eine Schicht aus einem flächenförmigen Schmelzklebergebilde vorgesehen. Die Gelegeschichten und die zumindest eine Schicht aus Schmelzklebergebilde sind lose aufeinandergelegt und miteinander vernäht. Die Schicht bzw. die Schichten aus Schmelzklebergebilde können Zwischenschichten und/oder Deckschichten der Fasergelegeanordnung sein.

Im Gegensatz zu der Anordnung, wie sie in der eingangs erwähnten DE 195 37 663 A1 beschrieben ist, haftet dabei das erfindungsgemäß vorgesehene Schmelzklebergebilde nicht an den Fasergelegeschichten, sondern ist in seinem Ausgangszustand, in welchem es zwischen die Fasergelegeschichten eingelegt wird, gar nicht klebefähig. Der Zusammenhalt der Fasergelegeanordnung wird durch das Vernähen gewährleistet. Erst beim Umformprozeß, d.h. bei der Umformung des zunächst flächigen Fasergeleges in die dreidimensionale Vorformlingsgestalt, wird der Schmelzkleber durch entsprechende Wärmeenergiezufuhr aktiviert, d.h. geschmolzen. Dadurch liegt erfindungsgemäß während des Umformprozesses ein in sich "schwimmendes" Gesamtgebilde vor. Die endlosen Faserbündel können so unter der Druckeinwirkung im Preßwerkzeug in die gewünschte Lage "schwimmen" bzw. gleiten. Der Schmelzkleber fungiert dabei praktisch als "Schmierstoff" bzw. Gleitmedium. Die Fasern können sich trotz ihrer Länge und Ausrichtung spannungsfrei in die gewünschte Lage bewegen. Mit entsprechender Abkühlung verkleben die Fasern dann durch den Schmelzkleber miteinander und behalten die gewünschte Kontur.

Der Erfindung liegt also der Gedanke zugrunde, in die Fasergelegeanordnung eine schmelzfähige Schicht einzubinden, die erst beim Umformprozeß aktiviert wird und nach der Umformung für eine bleibende Verfestigung des Vorformlings sorgt.

Die Faserbündel können dabei je nach konstruktiver Anforderung aus unterschiedlichsten Ausgangsfasern bestehen, etwa Glasfasern, Carbonfasern, Aramidfasern, thermoplastischen oder sonstigen Kunststoff-Fasern, Quarzfasern etc. Vorzugsweise sind mehrere Gelegeschichten mit jeweils unterschiedlicher Faserorientierung zu einem multiaxialen Gelege kombiniert. Es ist günstig, die Faserbündel innerhalb einer Lage etwas beabstandet nebeneinander anzuordnen, da die Faserbündel dann beim Umformprozeß besser "schwimmen" können.

Die Schmelzklebergebilde sind vorteilhaft als im Ganzen handhabbare flächige Teile ausgebildet, etwa filmförmig, als Klebevliese oder als netzartig strukturierte Flächengebilde. Vorzugsweise sind die Schmelzklebergebilde aus thermoplastischem Polymermaterial hergestellt. Als Hauptpolymertypen kommen dabei Polyurethan, Polyamid, Polyolefin, und/oder Polyester in Frage, ebenso aber auch andere Polymertypen, in Abstimmung mit der Materialwahl für die Verstärkungsfasern.

Klebevliese werden aus schmelzgesponnenen Polymerfäden hergestellt. Ein solches Herstellungsverfahren ist beispielsweise in der DE 41 19 455 C1 beschrieben. Derartige Spinnvliesstoffe wurden bisher neben Anwendungen in Hygieneprodukten und in der Filtertechnik zur Trockenkaschierung und z.B. zur Herstellung von Textillaminaten verwendet. Die Herstellung filmförmiger und netzartiger Polymer-Flächengebilde ist z.B. in der US 4,842,794 erläutert. Polymerfilme werden im Extrusionsverfahren hergestellt und anschließend ggfs. zu netzartigen Strukturen perforiert.

In einer weiteren Ausführung können die Schmelzklebergebilde auch Vliese sein, die mit einer Schmelzklebersubstanz imprägniert sind, sogenannte Prepregs (preimpregnated).

Die erfindungsgemäß verwendeten Schmelzklebergebilde, wie etwa Klebevliese, lassen sich hervorragend handhaben und bearbeiten, da sie im Ausgangszustand trocken sind und nicht haften oder kleben. Man kann sie daher problemlos in ein Fasergelege einlegen und einnähen und die Gelegekonstruktion läßt sich problemlos bearbeiten, z.B. beschneiden. Mit einem Klebevlies läßt sich der Kleber auch in sehr geringen Mengen dosieren und ist stets gleichmäßig verteilt. Es ist dabei nicht erforderlich, bei multiaxialen Fasergelegen zwischen alle Gelegelagen Klebevliese einzufügen, da der Schmelzkleber im geschmolzenen Zustand auch durch die Faserzwischenräume hindurchdringt, insbesondere bei beabstandet gelegten Faserbündeln.

Vorzugsweise weist das erfindungsgemäß eingesetzte Schmelzklebergebilde ein Flächengewicht im Bereich von etwa 10 g/m² bis 70 g/m² auf, insbesondere im Bereich von etwa 10 g/m² bis 30 g/m².

Beim erfindungsgemäßen Verfahren zur Herstellung eines Vorformlings wird eine flächige Lage nebeneinanderliegender, jeweils gleich orientierter Verstärkungsfaserbündel (Rovings) gebildet. Darauf wird eine weitere Lage aus Verstärkungsfaserbündeln in einer anderen Faserorientierung aufgelegt. Auf diese Weise entsteht ein multiaxiales Gelege. Während des Aufbaus dieser Gelegeschichtung wird erfindungsgemäß zumindest an einer Stelle eine Lage aus einem flächigen Schmelzklebergebilde zwischen die einzelnen Faserlagen eingelegt. Es können auch an mehreren Stellen Schmelzklebergebilde als Zwischenschichten zwischen die Faserlagen eingelegt und/oder als Deckschichten aufgelegt werden. Die geschichteten Lagen werden miteinander vernäht. Die so gebildete handhabbare Fasergelegeanordnung wird dann gegebenenfalls auf die gewünschten Abmessungen geschnitten oder gestanzt und z.B. auf einen Spann- und Handhabungsrahmen aufgebracht. Dann wird die Fasergelegeanordnung auf Schmelz- bzw. Verarbeitungstemperatur des zumindest einen eingenähten Schmelzklebergebildes erwärmt, in einem Preßformwerkzeug in eine vorgegebene dreidimensionale Formgestalt gepreßt, abgekühlt und entformt. Danach erfolgt gegebenenfalls eine Nachbearbeitung des Vorformlings durch Beschneiden, Stanzen o.ä.

Wenn die zuvor erläuterte Fasergelegeanordnung erwärmt, formgepreßt und abgekühlt ist, hat man einen Vorformling mit der gewünschten bleibenden dreidimensionalen Gestalt. Durch den Spannungsausgleich in der Fasergelegeanordnung während des Umformprozesses, wo die Faserbündel in ihre Position "schwimmen" können, ist der Vorformling praktisch frei von Rückstellkräften und sehr paßgenau. Damit kann er prozeßsicher weiterverarbeitet werden. Die Erfindungslösung ermöglicht also eine prozeßsichere automatisierte Herstellung von Faserverbundwerkstoffbauteilen mit hohen Festigkeiten und komplexen Geometrien.

### Kurzbeschreibung der Zeichnungen

Zum besseren Verständnis und zur weiteren Beschreibung wird die Erfindung nachfolgend anhand eines Ausführungsbeispiels mit Bezug auf die beigefügten Zeichnungen näher erläutert. Es zeigen:
- Fig.1: eine schematische Explosionsdarstellung der einzelnen Schichten eines Ausführungsbeispiels der erfindungsgemäßen Fasergelegeanordnung;
- Fig.2: die Fasergelegeanordnung von Fig.1 im vernähten Zustand in einer vergrößerten Draufsicht;
- Fig.3: eine Prinzipdarstellung des Fertigungsablaufs zur Herstellung eines Vorformlings aus der erfindungsgemäßen Fasergelegeanordnung.

### Beschreibung eines Ausführungsbeispiels der Erfindung

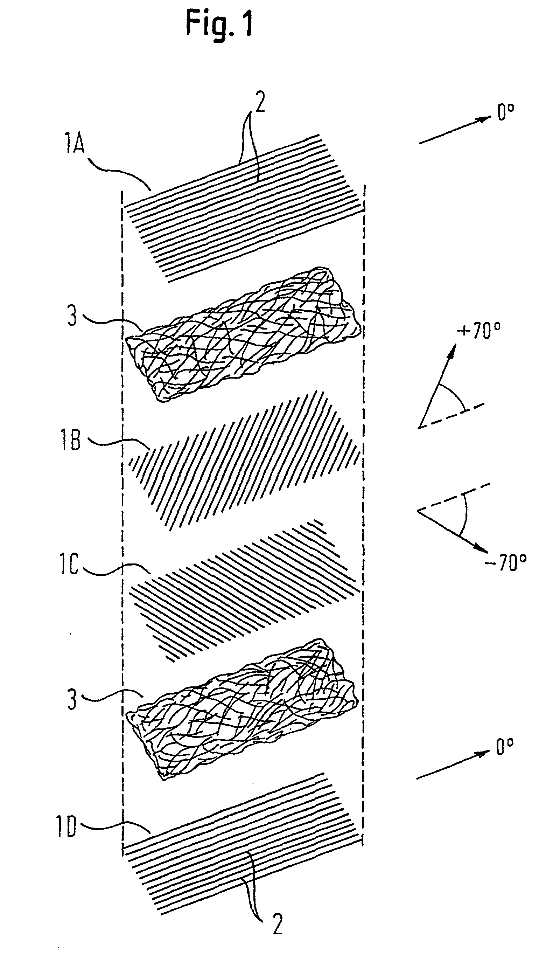

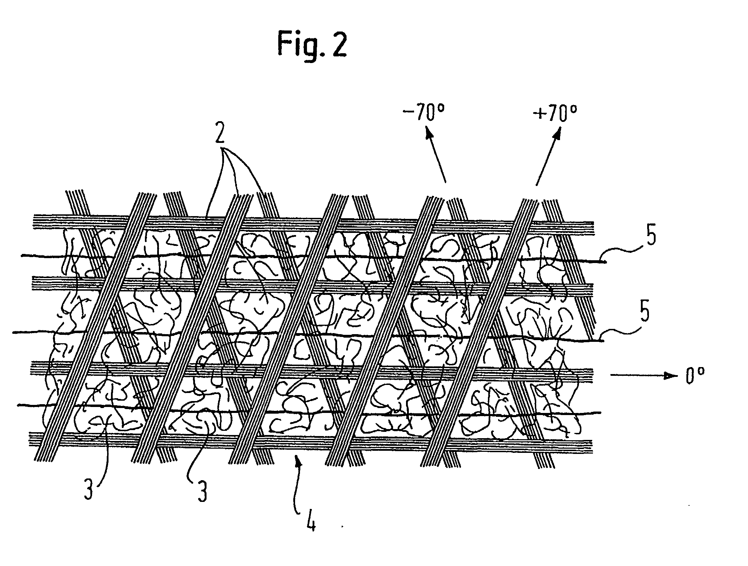

Fig. 1 zeigt beispielhaft den Schichtaufbau einer erfindungsgemäßen Fasergelegeanordnung. Einzelne Faserlagen 1A bis 1D sind aus Endlosfaserbündeln 2, sogenannten Rovings, gelegt und zwar jeweils in einer bestimmten Faserwinkelorientierung (hier 0°, +70°, -70°). Die Faserlagen sind aufeinandergelegt, wobei teilweise Klebevliese 3 als Zwischenlagen eingelegt sind. Fig.2 zeigt die geschichtete und mit Nähfäden 5 vernähte Fasergelegeanordnung 4. In der folgenden Tabelle sind die einzelnen Schichten in Fig.1 bzw. Fig.2 näher erläutert.

| **Bezugsziffer** | **Material** | **Faserorientierung** | **Gewicht (g/m**^{**2**}**)** |
|---|---|---|---|
| 1A | Glasfaser | 0^{o} | 200 |
| 3 | Copolyester | Vlies | 30 |
| 1B | Glasfaser | +70° | 200 |
| 1C | Glasfaser | -70° | 200 |
| 3 | Copolyester | Vlies | 30 |
| 1D | Glasfaser | 0^{o} | 200 |
| 5 | Polyester | Nähfaden | 15 |

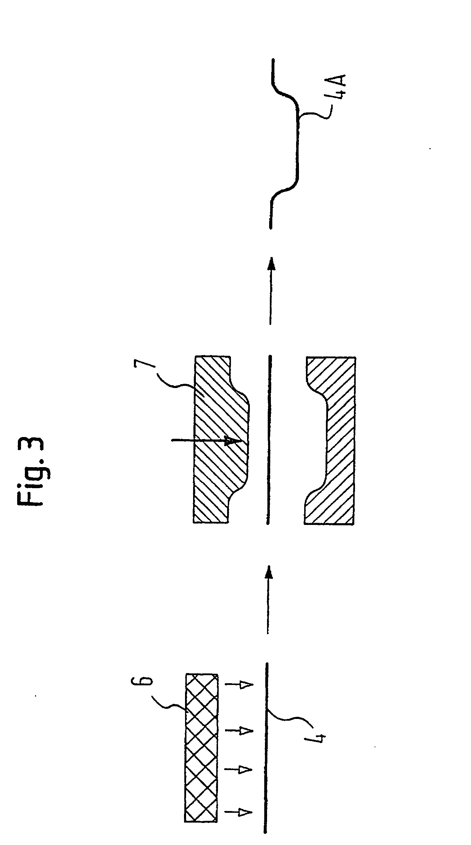

Fig. 3 illustriert den Umformprozeß, um aus einer Fasergelegeanordnung gemäß Fig. 2 einen in gewünschter Weise dreidimensional geformten Vorformling zu fertigen. In einem Spannrahmen gehaltert, wird die Fasergelegeanordnung 4 von einer Heizvorrichtung 6 auf Schmelz- bzw. Verarbeitungstemperatur der Klebevliese 3 erwärmt. Dann wird die Fasergelegeanordnung 4 in ein Formpreßwerkzeug 7 eingelegt und in die gewünschte Gestalt gepreßt, wobei die Faserbündel 2 in dem geschmolzenen Schmelzkleber der Klebevliese 3 in ihre Position gleiten können. Nach dem Abkühlen und Entformen aus dem Preßwerkzeug 7 behält der Vorformling 4A seine durch den Schmelzkleber verfestigte Gestalt.

Der Aufheizvorgang der Fasergelegeanordnung kann alternativ z.B. auch im Bereich des Preßwerkzeugs erfolgen. Außerdem können Bearbeitungsvorgänge wie Schneiden oder Stanzen vor- bzw. nachgeschaltet sein.

## Patentansprüche

1. Fasergelegeanordnung für einen Vorformling eines Faserverbundwerkstoffbauteils, mit
- mindestens einer Gelegeschicht (1A-1D) aus gleichgerichteten nebeneinander angeordneten, jeweils aus Verstärkungsfasern gebildeten Faserbündeln (2) und
- mindestens einer Schicht aus einem flächenförmigen Schmelzklebergebilde (3),
- wobei die Schichten (1A-1D, 3) aufeinanderliegen und miteinander vernäht sind,
**dadurch gekennzeichnet, dass**
- das Schmelzklebergebilde als Klebevlies (3) oder in einer netzartigen Flächenstruktur ausgebildet ist und ein Flächengewicht im Bereich von etwa 10 g/m² bis 70 g/m² aufweist.

2. Fasergelegeanordnung nach Anspruch 1,
**dadurch gekennzeichnet, dass**
innerhalb einer Gelegeschicht (1A-1D) die Faserbündel (2) voneinander beabstandet sind.

3. Fasergelegeanordnung nach Anspruch 1 oder 2,
**dadurch gekennzeichnet, dass**
mehrere Gelegeschichten (1A-1D) mit unterschiedlicher Faserorientierung (0°, +70°, -70°) vorgesehen sind.

4. Fasergelegeanordnung nach einem der Ansprüche 1 bis 3,
**dadurch gekennzeichnet, dass**
das Schmelzklebergebilde (3) ein handhabbares Teil ist.

5. Fasergelegeanordnung nach einem der Ansprüche 1 bis 4,
**dadurch gekennzeichnet, dass**
das Schmelzklebergebilde (3) aus thermoplastischem Polymermaterial gebildet ist.

6. Fasergelegeanordnung nach einem der Ansprüche 1 bis 5,
**dadurch gekennzeichnet, dass**
das Schmelzklebergebilde filmförmig ausgebildet ist.

7. Fasergelegeanordnung nach Anspruch 1,
**dadurch gekennzeichnet, dass**
das Klebevlies (3) aus schmelzgesponnenen Polymerfäden gebildet ist.

8. Fasergelegeanordnung nach Anspruch 1,
**dadurch gekennzeichnet, dass**
die netzartige Flächenstruktur des Schmelzklebergebildes aus einem extrudierten und perforierten Polymerfilm gebildet ist.

9. Fasergelegeanordnung nach Anspruch 1,
**dadurch gekennzeichnet, dass**
das Schmelzklebergebilde ein Flächengewicht im Bereich von etwa 10 g/m² bis 30 g/m² aufweist.

10. Fasergelegeanordnung nach einem der Ansprüche 1 bis 9,
**dadurch gekennzeichnet, dass**
die Anordnung (4) erwärmt (6), formgepreßt (7) und abgekühlt ist und eine vorgegebene bleibende dreidimensionale Formgestalt (4A) aufweist.

11. Verfahren zur Herstellung eines Vorformlings für ein Faserverbundwerkstoffbauteil, mit folgenden Verfahrensschritten:
- Bilden schichtweise aufeinanderliegender flächiger Lagen (1A-1D) aus nebeneinanderliegenden, jeweils in bestimmter Orientierung ausgerichteten Verstärkungsfaserbündeln (2) unter Einfügung zumindest einer Deck- oder Zwischenlage aus einem als ganzes Teil handhabbaren, flächigen Schmelzklebergebilde (3), das als Klebevlies (3) oder in einer netzartigen Flächenstruktur ausgebildet ist und ein Flächengewicht im Bereich von etwa 10 g/m² bis 70 g/m² aufweist und Vernähen (5) der geschichteten Lagen (1A-1D, 3) zur Bildung einer handhabbaren Fasergelegeanordnung (4);
- Erwärmen (6) der Fasergelegeanordnung (4) bis auf Schmelz- bzw. Verarbeitungstemperatur des zumindest einen eingenähten Schmelzklebergebildes (3);
- Pressen der erwärmten Fasergelegeanordnung (4) in einem Preßformwerkzeug (7) in eine vorgegebene dreidimensionale Formgestalt;
- Abkühlen und Entformen des dreidimensionalen Vorformlings (4A).

12. Verfahren nach Anspruch 11,
**dadurch gekennzeichnet, dass**
bei der Bildung der flächigen Lagen (1A-1D) aus Faserbündeln (2) die Faserbündel (2) voneinander beabstandet gelegt werden.

13. Verfahren nach Anspruch 11 oder 12,
**dadurch gekennzeichnet, dass**
bei der Bildung der geschichteten Lagen (1A-1D) die Faserbündel (2) in der nächstfolgenden Lage in unterschiedlicher Faserorientierung im Vergleich zur vorangegangenen Lage gelegt werden.

14. Verfahren nach einem der Ansprüche 11 bis 13,
**dadurch gekennzeichnet, dass**
als Schmelzklebergebilde (3) ein flächiges thermoplastisches Polymermaterialgebilde eingelegt wird.

15. Verfahren nach einem der Ansprüche 11 bis 14,
**dadurch gekennzeichnet, dass**
als Schmelzklebergebilde ein Klebevlies (3) oder ein filmförmiges oder netzflächenartiges Schmelzkleberteil eingelegt wird.

## Claims

1. Fibrous structure arrangement for a preform of a fibre composite material component, having
- at least one structural layer (1A-1D) made from fibre bundles (2) formed in each case from reinforcing fibres and arranged next to one another in the same direction and
- at least one layer of a laminar melt-adhesive structure (3),
- wherein the layers (1A-1D, 3) lie one on another and are sewn to one another,
**characterised in that**
- the melt-adhesive structure is designed as adhesive nonwoven (3) or in a network-like laminar structure and has a weight per unit area in the range from about 10 g/m² to 70 g/m².

2. Fibrous structure arrangement according to claim 1, **characterised in that** the fibre bundles (2) are at a distance from one another within a structural layer (1A-1D).

3. Fibrous structure arrangement according to claim 1 or 2, **characterised in that** several structural layers (1A-1D) having different fibre orientation (0°, +70°, -70°) are provided.

4. Fibrous structure arrangement according to one of claims 1 to 3, **characterised in that** the melt-adhesive structure (3) is a manageable part.

5. Fibrous structure arrangement according to one of claims 1 to 4, **characterised in that** the melt-adhesive structure (3) is formed from thermoplastic polymer material.

6. Fibrous structure arrangement according to one of claims 1 to 5, **characterised in that** the melt-adhesive structure is designed to be like a film.

7. Fibrous structure arrangement according to claim 1, **characterised in that** the adhesive nonwoven (3) is formed from melt-spun polymer threads.

8. Fibrous structure arrangement according to claim 1, **characterised in that** the network-like laminar structure of the melt-adhesive structure is formed from an extruded and perforated polymer film.

9. Fibrous structure arrangement according to claim 1, **characterised in that** the melt-adhesive structure has a weight per unit area in the range from about 10 g/m² to 30 g/m².

10. Fibrous structure arrangement according to one of claims 1 to 9, **characterised in that** the arrangement (4) is heated (6), moulded (7) and cooled and has a predetermined lasting three-dimensional shape (4A).

11. Process for producing a preform for a fibre composite material component, having the following process steps:
- forming laminar layers (1A-1D), lying one on another in layers, of reinforcing fibre bundles (2) lying next to one another, in each case aligned in certain orientation with insertion of at least one covering or intermediate layer of a laminar melt-adhesive structure (3) which can be handled as a whole part, and which is designed as adhesive nonwoven (3) or in a network-like laminar structure and has a weight per unit area in the range from about 10 g/m² to 70 g/m², and sewing (5) of the layered layers (1A-1D, 3) to form a manageable fibrous structure arrangement (4);
- heating (6) the fibrous structure arrangement (4) to melting or processing temperature of the at least one sewn-in melt-adhesive structure (3);
- pressing the heated fibrous structure arrangement (4) in a compression-moulding die (7) into a predetermined three-dimensional shape;
- cooling and removing the three-dimensional preform (4A) from the mould.

12. Process according to claim 11, **characterised in that** during formation of the laminar layers (1A-1D) made from fibre bundles (2), the fibre bundles (2) are laid at a distance from one another.

13. Process according to claim 11 or 12, **characterised in that** during formation of the layered layers (1A-1D), the fibre bundles (2) are laid in the next layer in different fibre orientation compared to the preceding layer.

14. Process according to one of claims 11 to 13, **characterised in that** a laminar thermoplastic polymer material structure is embedded as melt-adhesive structure (3).

15. Process according to one of claims 11 to 14, **characterised in that** an adhesive nonwoven (3) or a film-like or network-laminar melt-adhesive part is embedded as melt-adhesive structure.

## Revendications

1. Agencement de structure à fibres pour une ébauche d'un composant en matériau composite à fibres, comportant :
- au moins une couche de structure (1A-1D) de faisceaux de fibres (2) agencés les uns à côté des autres avec le même alignement et formés chacun par des fibres de renforcement, et
- au moins une couche d'une structure de colle fusible (3) en forme de surface,
- les couches (1A-1D, 3) étant posées les unes sur les autres et cousues les unes aux autres,
**caractérisé en ce que**
- la structure de colle fusible est réalisée sous la forme d'une nappe de colle (3) ou d'une structure de surface en forme de réseau, et présente un poids superficiel dans la plage d'environ 10 g/m² à 70 g/m².

2. Agencement de structure à fibres selon la revendication 1, **caractérisé en ce qu'**à l'intérieur d'une couche de structure (1A-1D), les faisceaux de fibres (2) sont distants les uns des autres.

3. Agencement de structure à fibres selon l'une ou l'autre des revendications 1 et 2, **caractérisé en ce qu'**il est prévu plusieurs couches de structure (1A-1D) présentant des orientations de fibres différentes (0°, +70°, -70°).

4. Agencement de structure à fibres selon l'une quelconque des revendications 1 à 3, **caractérisé en ce que** la structure de colle fusible (3) est une pièce manipulable.

5. Agencement de structure à fibres selon l'une quelconque des revendications 1 à 4, **caractérisé en ce que** la structure de colle fusible (3) est formée en matériau polymère thermoplastique.

6. Agencement de structure à fibres selon l'une quelconque des revendications 1 à 5, **caractérisé en ce que** la structure de colle fusible est réalisée en forme de film.

7. Agencement de structure à fibres selon la revendication 1,
**caractérisé en ce que** la nappe de colle (3) est formée par des fils polymères filés par fusion.

8. Agencement de structure à fibres selon la revendication 1, **caractérisé en ce que** la structure de surface en forme de réseau de la structure de colle fusible est formée par un film polymère extrudé et perforé.

9. Agencement de structure à fibres selon la revendication 1, **caractérisé en ce que** la structure de colle fusible présente un poids superficiel dans la plage d'environ 10 g/m² à 30 g/m².

10. Agencement de structure à fibres selon l'une quelconque des revendications 1 à 9, **caractérisé en ce que** l'agencement (4) est chauffé (6), pressé en forme (7) et refroidi, et **en ce qu'**il présente une forme tridimensionnelle (4A) prédéterminée permanente.

11. Procédé pour réaliser une ébauche pour un composant en matériau composite à fibres, comportant les étapes suivantes :
- on forme des couches (1A-1D) situées à plat les unes sur les autres à partir de faisceaux de fibres de renforcement (2) situés les uns à côté des autres et alignés chacun dans une certaine orientation, en introduisant au moins une couche de couverture ou une couche intermédiaire constituée par une structure de colle fusible (3) manipulable dans son ensemble et en forme de surface, qui est réalisée sous la forme d'une nappe de colle (3) ou avec une structure de surface en forme de réseau et qui présente un poids superficiel dans la plage d'environ 10 g/m² à 70 g/m², et on coud (5) les couches superposées (1A-1D, 3) pour former un agencement de structure à fibres (4) manipulable ;
- on chauffe (6) l'agencement de structure à fibres (4) jusqu'à la température de fusion ou de traitement de ladite au moins une structure de colle fusible (3) cousue ;
- on presse l'agencement de structure à fibres (4) dans un outil de formage sous pression (7) pour obtenir une forme tridimensionnelle prédéterminée ;
- on refroidit et on démoule l'ébauche tridimensionnelle (4A).

12. Procédé selon la revendication 11, **caractérisé en ce que** lors de la formation des couches à plat (1A-1D) à partir des faisceaux de fibres (2), on pose les faisceaux de fibres (2) de façon distante les uns des autres.

13. Procédé selon l'une ou l'autre des revendications 11 et 12, **caractérisé en ce que** lors de la formation des couches superposées (1A-1D), on pose les faisceaux de fibres (2) dans la couche suivante avec une orientation de fibres différente par comparaison à la couche précédente.

14. Procédé selon l'une quelconque des revendications 11 à 13, **caractérisé en ce que** l'on pose, à titre de structure de colle fusible (3), une structure à plat en matériau polymère thermoplastique.

15. Procédé selon l'une quelconque des revendications 11 à 14, **caractérisé en ce que** l'on pose, à titre de structure de colle fusible, une nappe de colle (3) ou une pièce de colle fusible en forme de film ou en forme de réseau à plat.
